**Europäisches Patentamt**

**European Patent Office**

**Office européen des brevets**

(11) Veröffentlichungsnummer: **0 150 399**
**B1**

(12) **EUROPÄISCHE PATENTSCHRIFT**

(45) Veröffentlichungstag der Patentschrift: **03.10.90**

(51) Int. Cl.⁵: **H 04 Q 7/04**

(21) Anmeldenummer: **84115461.0**

(22) Anmeldetag: **14.12.84**

(54) Digitales Zellenfunksystem mit Zeitmultiplex.

(30) Priorität: **28.01.84 DE 3402941**

(43) Veröffentlichungstag der Anmeldung:
**07.08.85 Patentblatt 85/32**

(45) Bekanntmachung des Hinweises auf die
Patenterteilung:
**03.10.90 Patentblatt 90/40**

(84) Benannte Vertragsstaaten:
**DE FR GB IT**

(56) Entgegenhaltungen:
EP-A-0 064 686
EP-A-0 156 335
DE-A-2 806 178
DE-A-2 936 983

INTERNATIONAL CONFERENCE ON
COMMUNICATION, Boston, Mass., 19.-22. Juni
1983, Band 1, Seiten B8.3.1-B8.3.5, IEEE, New
York, US; C.E.SUNDBERG: "Novel antenna
configurations for cellular digital mobile radio
systems"

(73) Patentinhaber: **Licentia Patent-Verwaltungs-
GmbH
Theodor-Stern-Kai 1
D-6000 Frankfurt/Main 70 (DE)**

(72) Erfinder: **Kuchenbecker, Hans-Peter, Dr.-Ing.
Teutonenweg 13
D-7910 Neu-Ulm (DE)**
Erfinder: **Rohling, Hermann, Dipl.-Math.
Im Wiblinger Hart 33
D-7900 Ulm (DE)**

(74) Vertreter: **Schulze, Harald Rudolf, Dipl.-Ing. et al
Licentia Patent-Verwaltungs-GmbH Theodor-
Stern-Kai 1
D-6000 Frankfurt/Main 70 (DE)**

(56) Entgegenhaltungen:
IEEE TRANSACTIONS ON VEHICULAR
TECHNOLOGY, Band VT-25, Nr. 3, August 1976,
Seiten 68-74, Tokyo, JP; T.NOMURA et al.:
"Multiple radio zone plans in mobile radio
systems"

**Beschreibung**

Die Erfindung betrifft ein digitales Zellenfunksystem nach dem Oberbegriff des Ausspruchs 1, wie es aus der DE—OS 31 18 018 bekannt ist.

Zellenfunksysteme, z. B. für den öffentlichen beweglichen Landfunk, benötigen für die Funkübertragung zwischen den mobilen Teilnehmern und den Feststationen je nach Verkehrsaufkommen eine größere Zahl von Kanälen pro Feststation. Bei den herkömmlichen realisierten Verfahren sind dies Frequenzkanäle (FDMA). In der DE—OS 31 18 018 wurde ein Zeitmultiplexverfahren (TDMA) vorgeschlagen, so daß an die Stelle der Frequenzkanäle Zeitkanäle (Zeitschlitze) zur Übertragung der verschiedenen gleichzeitigen Gespräche treten. Die Übertragung im Zeitschlitz erfolgt digital mit einem orthogonalen Zeichensatz. Damit ist eine Spektrumsverbreiterung verbunden (Spreizung). Diese ermöglicht es, mit Hilfe von Empfangskorrelatoren für die einzelnen Zeichen des Zeichensalzes eine zeitliche Auflösung der einzelnen Wellen im Mehrwegeempfangsfeld zu erreichen und dadurch die Intersymbolinterferenz trotz hoher Übertragungsrate zu vermeiden. Weitere Einzeiheiten können der zitierten Offenlegungsschrift entnommen werden.

Beim Zeitmultiplex kommt der Entstörung räumlich benachbarter Zellen erhöhte Bedeutung zu. Um zu vermeiden, daß eine bewegliche Sende/Empfangsstation, die sich im Grenzbereich zweier Zellen aufhält, gleichzeitig in störender Weise von zwei benachbarten ortsfesten Stationen angeleuchtet wird, sind verschiedene Möglichkeiten bekannt:

1. Frequenzmultiplex in benachbarten Zellen (bei Zeitmultiplex innerhalb der Zellen). Diese Lösung ist nicht frequenzökonomisch.

2. Codemultiplex in benachbarten Zellen. Diese Lösung ist sehr aufwendig in der Ausstattung der mobilen Stationen.

3. Absprache zwischen benachbarten Zellen über zu benutzende Zeitschlitze. Dazu sind die Zellen mindestens in Dreiergruppen anzuordnen, so daß sich der Zugriff zum System um den Faktor drei reduziert.

Aufgabe der Erfindung ist es, ein digitales Zellenfunksystem der eingangs genannten Art so weiterzubilden, daß bei vertretbarem Aufwand eine Entstörung räumlich benachbarter Zellen und ein maximaler Zugriff zum System gewährleistet ist.

Die Erfindung ist im Patentanspruch 1 gekennzeichnet. Die weiteren Ansprüche beinhalten vorteilhafte Weiterbildungen bzw. Ausführungen der Erfindung.

Die Erfindung wird im folgenden näher erläutert.

Die Figuren zeigen Ausschnitte aus dem Zellenschema eines Zellenfunksystems. Jede Zelle wird von einer ortsfesten Sende/Empfangsstation bedient. Die Anbindung der ortsfesten Stationen an Leitstellen und das öffentliche Fernsprechnetz erfolgt nach dem Stand der Technik und ist nicht Gegenstand der Erfindung.

Gemäß der Erfindung sind die Zellen in Sektoren unterteilt, die in allen Zellen die gleiche räumliche Ausrichtung haben. Die ortsfesten Sendestationen weisen Richtantennen auf, die die einzelnen Sektoren ausleuchten. Die Abgrenzung der Sektoren ist nicht kritisch, die Antennenkeulen innerhalb einer Zelle dürfen sich in größeren Bereichen überlappen. Die ortsfesten Sendestationen senden Blöcke von Zeitschlitzen immer nur in einen Sektor und leuchten die einzelnen Sektoren nacheinander aus. Alle ortsfesten Stationen des Systems senden synchron in Sektoren mit gleicher räumlicher Ausrichtung.

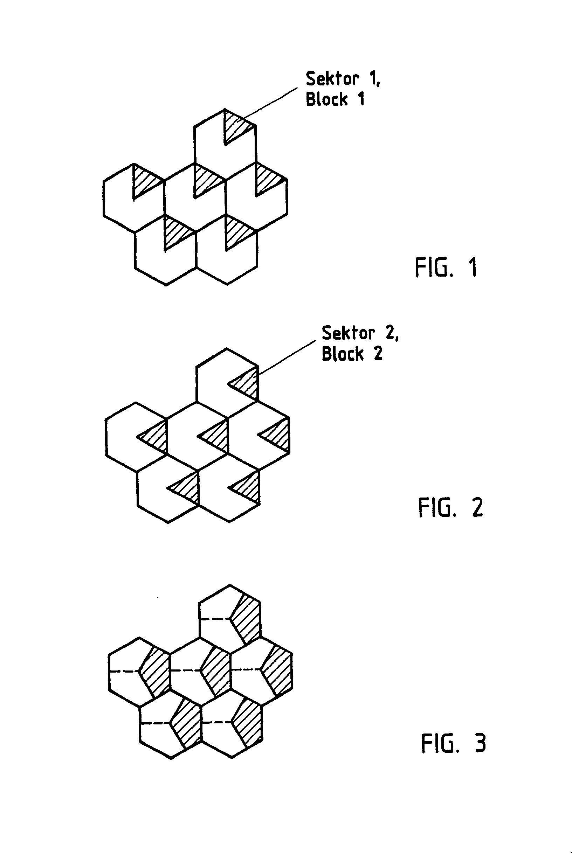

In Figur 1 senden alle ortsfesten Stationen während eines ersten Blocks von Zeitschlitzen in die schraffierten Sektoren. In Figur 2 sind die Richtantennen aller ortsfesten Stationen in den nächsten Sektor geschwenkt, der während eines zweiten Blocks von Zeitschlitzen ausgeleuchtet wird, usw.

Während eines Blocks erfolgt die Kommunikation mit den im entsprechenden Sektor befindlichen mobilen Stationen. Bei den betreffenen Zellenfunksystemen, auch Kleinzonennetze genannt, muß eine Ortsbestimmung der mobilen Stationen ohnehin erfolgen, um eine Zuordnung zu den Zellen und ein Weiterreichen zwischen Zellen bei Ortswechsel der mobilen Stationen zu ermöglichen.

Es sind verschiedene Methoden bekannt; z. B. Auswahl der besten ortsfesten Station durch die mobile Station über Feldstärkemessung auf einem Organisationskanal und Meldung mit Kennung an die ortsfeste Station; oder Laufzeitmessung, Feldstärkemessung, Peilung durch die ortsfesten Stationen, usw. Gemäß der Erfindung erfolgt zusätzlich die Ortsbestimmung nach Sektoren.

Eine Unterteilung der Zellen in drei Sektoren, wie in Figur 3 dargestellt, reicht bereits aus und ist aufwandsgünstig. Bei gleichmäßiger Verteilung der mobilen Stationen innerhalb einer Zelle ergibt sich ein Zugriffsgewinn um den Faktor drei gegenüber dem o. g. System mit Dreiergruppen. Auch bei in der Realität auftretenden statistischen Verzerrungen der Verteilung bleibt noch ein erheblicher Gewinn.

Vorzugsweise enthält jeder einem bestimmten Sektor zugeordnete Block von Zeitschlitzen einen Organisationszeitschlitz (Organisationskanal). Dadurch ist eine einfache Ortsbestimmung nach Sektoren möglich. Betriebsbereite mobile Stationen senden in den von ihnen empfangenen Organisationskanälen ihre Kennung an die ortsfesten Stationen. Wegen der eindeutigen Zuordnung von Zeitschlitzen und Sektoren ist dann der Sektor festgelegt, in dem die mobile Station sich befindet.

Die mobile Station kann sich z. B. nur in einem Organisationszeitschlitz melden und damit, wie oben beschrieben, die beste ortsfeste Station selbst auswählen. Sie kann, wenn sie sich im Grenzbereich zweier sich überlappender Sektoren befindet, sich in beiden zugeordneten Organisationszeitschlizen melden, so daß die ortsfeste Station, bzw. deren Leitstelle, einen großen Spielraum in der Kanalzuteilung (Zeitschlitz) bekommt. Sie kann aber auch, wenn sie nacheinander mehrere ortsfeste Stationen empfängt, sich in allen entsprechenden Organisationszeitschlitzen melden, wobei die ortsfesten Stationen selektiv über Kennungen angesprochen werden müssen. Letztere können dann mittels weiterer Kriterien wie Laufzeitmessung, Kanalbelegung usw., untereinander ausmachen, welcher Zelle die mobile Station zugeordnet werden soll.

In einem Beispielsfall sind die Zellen in drei Sektoren unterteilt. Es ist ein Zeitrahmen von 30 Zeitschlitzen gewählt, der sich mit einer Rate von 30 pro Sekunde wiederholt. Dem ersten Sektor ist ein Block mit den ersten 10 Schlitzen zugeordnet. Schlitz 1 ist ein Organisationskanal, Schlitze 2 bis 10 sind 9 Sprachkanäle. Dem zweiten Sektor ist ein Block mit den nächsten 10 Schlitzen zugeordnet. Schlitz 11 ist ein Organisationskanal, Schlitze 12 bis 20 sind wieder 9 Sprachkanäle, usw.

**Patentansprüche**

1. Digitales Zellenfunksystem mit ortsfesten Sende/Empfangsstationen und mit beweglichen Sende/Empfangsstationen, die über Funk im Zeitmultiplex mit Vielfachzugriff mit den ortsfesten Stationen Nachrichten austauschen können, wobei mehrere ortsfeste Stationen von einer Leitstelle gesteuert werden, von denen wiederum mehrere mit einer Überleiteinrichtung zu einem Fernsprechwählnetz verbunden sind, dadurch gekennzeichnet, daß die ortsfesten Sendestationen Richtantennen aufweisen, welche die von der jeweiligen Station bediente Zelle sektorweise ausleuchten, daß die Sektoren aller Zellen des gesamten Zellenfunksystems die gleiche räumliche Ausrichtung aufweisen, daß die ortsfesten Sendestationen derart ausgestaltet sind, daß sie während eines Blockes von Zeitschlitzen nur einen Sektor ausleuchten und die Sektoren ihrer Zelle nacheinander ausleuchten, daß alle ortsfesten Sendestationen des Zellenfunksystems stets synchron in Sektoren gleicher räumlicher Ausrichtung leuchten, und daß eine Ortsbestimmung der mobilen Sende/Empfangsstationen nach Sektoren erfolgt.

2. Digitales Zellenfunksystem nach Anspruch 1, dadurch gekennzeichnet, daß jede Zelle in drei Sektoren unterteilt ist.

3. Digitales Zellenfunksystem nach Anspruch 1, dadurch gekennzeichnet, daß jeder einem bestimmten Sektor zugeordnete Block von Zeitschlitzen einen Organisationszeitschlitz (Organisationskanal) enthält.

4. Digitales Zellenfunksystem nach Anspruch 3, dadurch gekennzeichnet, daß betriebsbereite mobile Sende/Empfangsstationen ihre Kennung in den von ihnen empfangenen Organisationskanälen an die ortsfesten Sende/Empfangsstationen senden.

**Revendications**

1. Système de radiotéléphone numérique cellulaire comportant des stations fixes d'émission/réception et des stations mobiles d'émission/réception qui peuvent échanger des informations en multiplexage par répartition dans le temps avec accès multiple aux stations fixes, étant précisé que plusieurs stations fixes sont pilotées par un poste de raccordement dont, à nouveau, plusieurs sont reliés à un dispositif de transmission au réseau téléphonique commuté public, caractérisé en ce que les stations fixes d'émission présentent des antennes directionnelles qui couvrent, par secteur, les cellules desservies par la station respective; en ce que les secteurs de toutes les cellules de l'ensemble des systèmes de radiotéléphone cellulaire présentent la même orientation spatiale; en ce que les stations fixes d'émission sont conçues de façon à ne couvrir qu'un seul secteur pendant un bloc de tranches de temps et à couvrir les uns après les autres les secteurs de leurs cellules; en ce que toutes les stations fixes d'émission du système de radiotéléphone cellulaire couvrent en synchronisme les secteurs de même orientation spatiale; et en ce que la localisation des stations mobiles d'émission/réception se fait par secteurs.

2. Système de radiotéléphone numérique cellulaire selon la revendication 1, caractérisé en ce que chaque cellule est divisée en trois secteurs.

3. Système de radiotéléphone numérique cellulaire selon la revendication 1, caractérisé en ce que chaque bloc de tranches de temps correspondant à un secteur déterminé contient une tranche de temps d'organisation (canal d'organisation).

4. Système de radiotéléphone numérique cellulaire selon la revendication 3, caractérisé en ce que les stations mobiles d'émission/réception prêtes à fonctionner envoient, sur les canaux d'organisation qu'elles reçoivent, leur indicatif aux stations fixes d'émission/réception.

**Claims**

1. Digital cellular radio system with fixed transmitting-receiving stations and with mobile transmitting-receiving stations which can exchange communications with the fixed stations by radio in time multiplex with multiple access, wherein several fixed stations are controlled by a master station, of which several are in turn connected to a telephone dialling network, characterised thereby, that the fixed transmitting stations display directional aerials which sector by sector illuminate the cell served by the respective station, that the sectors of all cells of the entire cellular radio system display the same spatial orientation, that the fixed transmitting stations are structured in such a manner that they illuminate only one sector during a block of time slots and illuminate the sectors of their cell one after the other, that all the fixed transmitting stations of the cellular radio system always illuminate sectors of the same spatial orientation synchronously and that a determination of location of the mobile transmitting-receiving stations takes place according to sectors.

2. Digital cellular radio system according to claim 1, characterised thereby, that each cell is subdivided into three sectors.

3. Digital cellular radio system according to claim 1, characterised thereby, that each block of time slots, that is allocated to a certain sector, contains an organisation time slot (organisation channel).

4. Digital cellular radio system according to claim 3, characterised thereby, that operationally ready mobile transmitting-receiving stations transmit their identification to the fixed transmitting-receiving stations in the organisation channels received by them.

Sektor 1,
Block 1

FIG. 1

Sektor 2,
Block 2

FIG. 2

FIG. 3